# EUROPÄISCHE PATENTANMELDUNG

(11) **EP 0 523 265 A1**
(43) Veröffentlichungstag der Anmeldung: **20.01.1993**
(21) Anmeldenummer: 91111957.6
(22) Anmeldetag: 17.07.1991
(51) Int. Cl.: G21C 3/322

(54) **Kernreaktorbrennelement mit Drallerzeuger**

(71) Anmelder: SIEMENS AKTIENGESELLSCHAFT, D-80333 München (DE)
(72) Erfinder: Kraemer, Wendelin, Dr.-Ing., W-6000 Frankfurt (DE); Uebelhack, Walter, Dr.rer.nat., W-6272 Niedernhausen (DE)

(57) **Zusammenfassung**

Ein Kernreaktorbrennelement mit einem teillangen Brennstab (8) hat zur intensiven Durchnässung und damit zum Erzielen einer hohen Siedeübergangsleistung benachbarter Brennstäbe (7) am Oberende des teillangen Brennstabes einen koaxialen Zylinderkörper (10), der als Drallerzeuger auf der äußeren Mantelfläche mindestens eine in bezug auf die Längsachse des Zylinderkörpers (10) weldelförmig verlaufende Leitschaufel (12), oder auf dessen Stirnfläche einflaches Blech (17) mit zwei geneigten Fahnen (20,21) aufweist.

## Beschreibung

Die Erfindung betrifft ein Kernreaktorbrennelement nach dem Gattungsbegriff des Patentanspruchs 1 und 10.

Ein derartiges Kernreaktorbrennelement ist aus der japanischen Offenlegungsschrift 63-144 219 bekannt. Dieses Kernreaktorbrennelement ist für einen Siedewasserkernreaktor bestimmt, und der Drallerzeuger an dem Oberende des teillangen Stabes ist ein um die Längsachse dieses teillangen Brennstabes verdrilltes Blech.

Durch dieses verdrillte Blech werden im Zweiphasenbereich des Kernreaktorbrennelementes in einem Siedewasserkernreaktor die benachbarten Brennstäbe, die den teillangen Brennstab überragen, mit flüssigem Wasser umspült und die Moderierung von Neutronen sichergestellt.

Der Erfindung liegt die Aufgabe zugrunde, die Durchnässung der dem teillangen Brennstab benachbarten Brennstäbe noch intensiver zu gestalten und dadurch die Siedeübergangsleistung, d.h. die thermische Leistung der den teillangen Brennstab überragenden benachbarten Brennstäbe im Siedewasserkernreaktor zu erhöhen, bei der an den Außenflächen der Hüllrohre dieser Brennstäbe ein Austrocknen des Flüssigkeitsfilmes und eine damit verbundene örtliche Überhitzung auftreten kann.

Zur Lösung dieser Aufgabe hat ein Kernreaktorbrennelement der eingangs erwähnten Art erfindungsgemäß die Merkmale des kennzeichnenden Teiles des Patentanspruchs 1 oder 10.

Dieses Kernreaktorbrennelement bewirkt in einem Siedewasserkernreaktor nicht nur einen relativ geringen Druckabfall in dem das Kernreaktorbrennelement durchströmenden Kühlmittel, sondern die Leitschaufeln auf der äußeren Mantelfläche des koaxialen Zylinderkörpers bzw. die geneigten Blechfahnen an der Stirnfläche des Oberendes des teillangen Brennstabes erfassen insbesondere den Flüssigkeitsfilm, der auf dem teillangen Brennstab bis zu seinem Oberende entlangströmt und ihn benetzt. Dieser Flüssigkeitsfilm reißt am Oberende des teillangen Brennstabes ab, und der Flüssigkeit wird in der Kühlmittelströmung im Siedewasserkernreaktor ein intensiver Drall aufgeprägt, der Flüssigkeitströpfen vom Dampf trennt. Diese Flüssigkeitströpfchen werden durch die Zentrifugalkraft des im Siedewasserkernreaktor über dem Oberende des teillangen Brennstabes entstehenden Wirbels nach außen auf die Oberflächen der benachbarten, den teillangen Brennstab überragenden Brennstäben über deren gesamte Länge abgeregnet. Diese Flüssigkeitströpfchen bewirken dadurch eine starke Flüssigkeitsfilmdicke außen auf den Hüllrohren dieser benachbarten Brennstäbe und damit eine relativ große Siedeübergangsleistung.

Patentanspruch 6 ist auf eine besonders vorteilhafte Weiterbildung des Kernreaktrobrennelements nach dem Anspruch 1 gerichtet, durch die die Trennung von Dampf- und Flüssigkeitsphase innerhalb des Kernreaktorbrennelementes im Zweiphasenbereich eines Siedewasserkernreaktors wirksam aufrechterhalten wird.

Die Erfindung und ihre Vorteile seien anhand der Zeichnung näher erläutert:
- Figur 1: zeigt stark schematisiert eine Seitenansicht eines erfindungsgemäßen Kernreaktorbrennelementes.
- Figur 2: zeigt die Seitenansicht einer Weiterbildung des Kernreaktorbrennelementes nach Figur 1.
- Figur 3: zeigt in perspektivischer Ansicht eine Abänderung für das Kernreaktorbrennelement nach Figur 1.

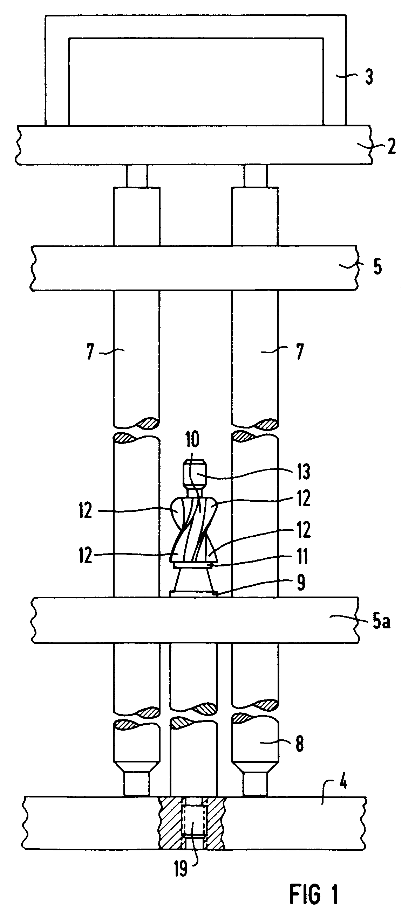

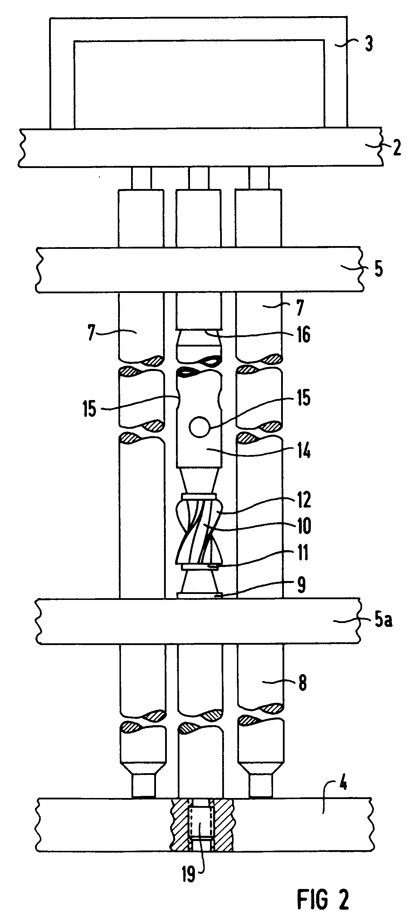

Die Kernreaktorbrennelemente nach den Figuren 1 und 2, in denen gleiche Teile mit gleichen Bezugszeichen versehen sind, sind für einen Siedewasserkernreaktor bestimmt. Jedes Kernreaktorbrennelement weist einen Brennelementkopf 2 mit einem Haltebügel 3 sowie einen Brennelementfuß 4 auf. Brennelementkopf 2 und Brennelementfuß 4 haben jeweils quadratischen Querschnitt und Durchtrittsöffnungen in Längsrichtung des Kernreaktorbrennelementes. Diese Durchtrittsöffnungen sind für ein Kühlmittel bestimmt, das das Kernreaktorbrennelement in einem Siedewasserkernreaktor in Längsrichtung gesehen vom Brennelementfuß 4 zum Brennelementkopf 2 durchströmt.

Zwischen Brennelementkopf 2 und Brennelementfuß 4 sind mehrere gitterförmige Abstandhalter 5 vorgesehen, die ebenfalls quadratisch sind und zum quadratischen Querschnitt von Brennelementkopf 2 und Brennelementfuß 4 parallelen Querschnitt haben. Diese gitterförmigen Abstandhalter 5 haben in Längsrichtung des Kernreaktorbrennelementes gesehen Abstand voneinander. Die gitterförmigen Abstandhalter 5 haben ferner Maschen, und durch jede Masche greift ein Brennstab 7, der Kernbrennstoff in einem an beiden Enden verschlossenen Hüllrohr aus einer Zirkoniumlegierung enthält. In den Kernreaktorbrennelementen nach Figur 1 und 2 sind nur zwei dieser Brennstäbe 7 dargestellt.

Ein solches Kernreaktorbrennelement kann eine Reihe sogenannter Tragestäbe aufweisen, das sind Brennstäbe 7, die an beiden Enden Gewindebolzen haben, mit denen sie am Brennelementkopf 2 und am Brennelementfuß 4 festgeschraubt sind. Die anderen Brennstäbe 7 greifen lose mit an ihren beiden Enden befindlichen Bolzen in Durchführungen im Brennelementkopf 2 und Brennelementfuß 4. Sie können zusätzlich jeweils mit einer nicht dargestellten, auf Druck vorgespannten Schraubenfeder fixiert sein, die auf den in die Durchführungen im Brennelementkopf 2 greifenden Bolzen auf der Innenseite des Brennelementkopfes 2 sitzen und sich an dieser Innenseite und am betreffenden Brennstab 7 abstützen. Anstelle der Tragestäbe kann auch ein an beiden Enden Öffnungen aufweisendes, nicht dargestelltes Wasserrohr vorgesehen sein, das mit einem Ende am Brennelementkopf 2 und mit dem anderen Ende am Brennelementfuß 3 festgeschraubt ist und so die Tragfunktion im Kernreaktorbrennelement übernimmt. Insbesondere in diesem Fall greifen die Brennstäbe 7 nur mit einem Ende lose in Durchführungen im Brennelementkopf 2, mit dem anderen Ende stehen sie, wie in Figur 1 und 2 dargestellt, auf dem Brennelementfuß 4 auf.

Die Brennstäbe 7 sind in den einzelnen Maschen der Abstandhalter 7 durch an den Abstandhaltern befindliche, in der Zeichnung nicht erkennbare Federn und starre Noppen kraftschlüssig gehaltert.

Die Brennstäbe 7 mit den gitterförmigen Abstandhaltern 5 befinden sich in einem nicht dargestellten, langgestreckten Brennelementkasten aus einer Zirkoniumlegierung. Dieser Brennelementkasten hat ebenfalls quadratischen Querschnitt und ist an beiden Enden offen. An einem offenen Ende liegt dieser Brennelementkasten mit der Innenseite seitlich am Brennelementkopf 2 und am anderen Ende seitlich am Brennelementfuß 4 an. An der Innenseite des Brennelementkastens befindet sich an dessen Oberende ferner eine Querstrebe, mit der der Brennelementkasten an der Oberseite des Brennelementkopfes 2 festgeschraubt ist.

Ein teillanger Brennstab 8 enthält ebenfalls Kernbrennstoff in einem an beiden Enden verschlossenen Hüllrohr aus einer Zirkoniumlegierung. An einem Ende dieses Brennstabes 8 befindet sich ein Gewindebolzen 19, mit dem der teillange Brennstab 8 am Brennelementfuß 4 festgeschraubt ist. Dieser teillange Brennstab 8 ist ebenfalls durch jeweils eine Masche der Abstandhalter 5 geführt, bis er über einer Oberseite des Abstandhalters 5a zwischen dieser Oberseite und dem Kopfteil 2 kürzer herausragt als benachbarte Brennstäbe 7, die mit einem Ende bis zum Brennelementkopf 2 reichen.

Am Oberende über der Oberseite des Abstandhalters 5a bildet der teillange Brennstab 8 eine koaxiale, scharfkantige Stufe 9. Der Außendurchmesser dieser Stufe 9 ist größer als der Außendurchmesser, mit dem sich der teillange Brennstab 8 kontinuierlich verjüngt und schließlich mit kontinuierlich verjüngtem Außendurchmesser auf einen koaxialen Zylinderkörper 10 eines Drallerzeugers trifft, der am Oberende des teillangen Brennstabes 8 über der Oberseite des Abstandhalters 5a angebracht ist. An der Auftreffstelle des teillangen Brennstabes 8 auf den Zylinderkörper 10 ist ferner eine koaxiale, scharfkantige Stufe 11 ausgebildet. Diese Stufe 11 hat einen Außendurchmesser, der größer ist als der verjüngte Außendurchmesser, mit dem der teillange Brennstab 8 auf die Stufe 11 trifft.

Der koaxiale Zylinderkörper 10 weist auf seiner äußeren Mantelfläche vier in bezug auf die Längsachse des Zylinderkörpers 10 wendelförmig verlaufende Leitschaufeln 12 auf. Zwei benachbarte Leitschaufeln 12 haben jeweils in bezug auf die Längsachse des Zylinderkörpers 10 voneinander überall den gleichen Winkelabstand 90°.

Das Oberende des Zylinderkörpers 10 geht schließlich in einen koaxialen Angriffsbolzen 13 über, an dem ein Werkzeug angreifen kann, mit dem der teillange Brennstab 8 am Brennelementfuß 4 fest- oder abgeschraubt und mit dem der teillange Brennstab 8 in Längsrichtung des Kernreaktorbrennelementes bewegt werden kann.

Günstigerweise ist der Außendurchmesser der Leitschaufeln 12 gleich dem Außendurchmesser des teillangen Brennstabes 8, so daß der teillange Brennstab 8 über seine gesamte Länge durch die Maschen der Abstandhalter 5 hindurch bewegt werden kann.

In einem Siedewasserkernreaktor strömt aus Wasser bestehendes flüssiges Kühlmittel durch die Durchführungen im Brennelementfuß 4 hindurch in das Kernreaktorbrennelement hinein, das mit dem nicht dargestellten Brennelementkasten versehen ist. Etwa in Höhe des Abstandhalters 5a beginnt der Zweiphasenbereich, und aufgrund des durch die Schaufeln 12 des Drallerzeugers erzeugten Dralls werden Tröpfchen aus flüssigem Wasser unter Einfluß der Zentrifugalkraft nach außen geschleudert. Die Wassertröpfchen regnen über dem teillangen Brennstab 8 im wesentlichen außen auf den Hüllrohren der dem teillangen Brennstab 8 benachbarten Brennstäbe 7 ab und verstärken dort den auf der Außenfläche dieser Hüllrohre befindlichen Flüssigkeitsfilm, während sich Wasserdampf im wesentlichen um die Längsachse des teillangen Brennstabes 8 herum über diesem teillangen Brennstab 8 ansammelt. Dieser Dampf kann schließlich durch die Durchführungen an dem Brennelementkopf 2 hindurch in Längsrichtung des Kernreaktorbrennelementes austreten.

Die Ausbildung von Wassertröpfchen im Zweiphasenbereich wird durch die koaxialen, scharfkantigen Stufen 9 und 11 begünstigt, an denen der außen am Hüllrohr des teillangen Brennstabes entlang strömende Wasserfilm abreißt und so das flüssige Wasser für die Tröpfchen zur Verfügung stellt.

Das Kernreaktorbrennelement nach Figur 2 unterscheidet sich von dem Kernreaktorbrennelement nach Figur 1 insbesondere dadurch, daß auf den Angreifbolzen 13 in Fig. 1 ein zum teillangen Brennstab 8 koaxiales Rohr 14 aufgesetzt ist, das jeweils durch eine Masche der über der Oberseite des Abstandhalters 5a zwischen diesem Abstandhalter 5a und dem Brennelementkopf 2 befindlichen Abstandhalter 5 geführt ist. Dieses Rohr 14 hat vorteilhafterweise einen gleichen Außendurchmesser wie der teillange Brennstab 8. Das Rohr 14 weist am Oberende einen Bolzen auf wie die Brennstäbe 7, mit dem es lose in eine Durchführung im Brennelementkopf 2 greift. In diesem Fall kann der teillange Brennstab 8 auch genauso wie in Fig. 2 für die Brennstäbe 7 dargestellt mit einem Ende auf dem Brennelementfuß 4 aufstehen.

Am Rohrende, das dem Zylinderkörper 10 benachbart ist, hat das Rohr 14 radiale Dampfeintrittsöffnungen 15 und am anderen Ende in Figur 2 eine nicht erkennbare Dampfaustrittsöffnung, die parallel zur Längsachse des Rohres 14 gerichtet ist.

Der Dampf, der infolge des durch die Leitschaufeln 10 im Kühlmittel erzeugten Dralls über dem teillangen Brennstab 8 abgetrennt wird, gelangt durch die Dampfeintrittsöffnungen 15 in das Rohr 14, wo er sich sammelt und sich nicht wieder mit den nach außen geschleuderten Flüssigkeitströpfchen vermischen kann.

Günstigerweise verjüngt sich der Außendurchmesser an einer oder mehreren Stellen des Rohres 14 in Längsrichtung des Rohres 14 weg von dem Zylinderkörper 10 gesehen kontinierlich bis zu einer koaxialen, scharfkantigen Stufe 16 mit einen Außendurchmesser, der größer ist als der verjüngte Außendurchmesser. An dieser scharfkantigen Stufe 16 kann ein Flüssigkeitsfilm, der außen am Rohr 14 in Richtung zum Brennelementkopf 2 strömt, aufgerissen werden. Infolge des Dralls, den das das Kernreaktorbrennelement durchströmende Kühlmittel durch die Gleitschaufeln 10 mitbekommen hat, werden die durch das Aufreißen des Flüssigkeitsfilms an der scharfkantigen Stufe 16 gebildeten Flüssigkeitströpfchen wieder nach außen geschleudert und regnen so ebenfalls auf die Außenflächen der benachbarten Brennstäbe 7. Dadurch wird deren Siedeübergangsleistung weiter verbessert.

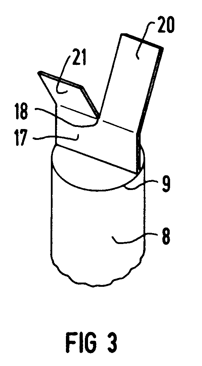

Figur 3 zeigt eine andere Ausgestaltung des Oberendes des teillangen Stabes 8 im Kernreaktorbrennelement nach Figur 1. Das in Figur 3 dargestellte Oberende unterscheidet sich von dem Oberende des teillangen Stabes 8 in Figur 1 insbesondere dadurch, daß die koaxiale scharfkantige Stufe 9 durch eine zur Längsachse des teillangen Stabes 8 rechtwinklige Stirnfläche dieses teillangen Stabes 8 gebildet ist. An dieser Stirnfläche ist ein flaches Blech 17 angebracht, das sich in einer von der Achse des teillangen Stabes 8 und einem Durchmesser der Stirnfläche gebildeten Ebene befindet. Längs dieser Achse ist dieses Blech 17 geschlitzt. Dieses Blech 17 bildet ferner zwei entgegengesetzt um eine zu dem Durchmesser der Stirnfläche paralle Biegelinie 18 geneigte Fahnen 20 und 21.

Ein zweites derartiges Blech kann mit Vorteil zusätzlich auf der Stirnfläche angeordnet sein und beispielsweise einen Winkelabstand von 90° in bezug auf die Achse des teillangen Brennstabes 8 von dem ersten Blech haben.

Das Blech 17 nach Figur 3 kann auch auf der Stirnfläche eines gesonderten, am Oberende des teillangen Brennstabes 8 angebrachten Zylinderkörpers angeordnet sein.

## Patentansprüche

1. Kernreaktorbrennelement mit zueinander parallelen, nebeneinander angeordneten, Kernbrennstoff enthaltenden Brennstäben, von denen jeder durch eine Masche eines Abstandhalters geführt ist, der sich in einer zur Längsrichtung der Brennstäbe rechtwinkligen Ebene befindet, sowie mit einem Kernbrennstoff enthaltenden, zu den Brennstäben parallelen, teillangen Brennstab, der ebenfalls durch eine Masche des Abstandhalters geführt ist, der über einer Oberseite des Abstandhalters kürzer hineinragt als benachbarte Brennstäbe und der an dem Oberende über dieser Oberseite einen Drallerzeuger aufweist,
**dadurch gekennzeichnet,** daß der Drallerzeuger ein zum teillangen Brennstab (8) koaxialer Zylinderkörper (10) ist, auf dessen äußerer Mantelfläche mindestens eine in bezug auf die Längsachse des Zylinderkörpers (10) wendelförmig verlaufende Leitschaufel (12) angeordnet ist.

2. Kernreaktorbrennelement nach Anspruch 1,
**dadurch gekennzeichnet,** daß der Außendurchmesser der Leitschaufel (12) höchstens gleich dem Außendurchmesser des teillangen Brennstabes (8) ist.

3. Kernreaktorbrennelement nach Anspruch 1,
**dadurch gekennzeichnet**, daß der teillange Brennstab (8) mit kontinuierlich verjüngtem Außendurchmesser auf den Zylinderkörper (10) mit den Leitschaufeln (12) trifft.

4. Kernreaktorbrennelement nach Anspruch 3,
**dadurch gekennzeichnet,** daß an der Auftreffstelle des teillangen Brennstabes (8) auf den Zylinderkörper (10) eine koaxiale, scharfkantige Stufe (11) mit einem Außendurchmesser ausgebildet ist, der größer ist als der verjüngte Außendurchmesser des teillangen Brennstabes (8).

5. Kernreaktorbrennelement nach Anspruch 3,
**dadurch gekennzeichnet,** daß sich der Außendurchmesser des teillangen Brennstabes (8) ausgehend von einer koaxialen, scharfkantigen Stufe (9) kontinuierlich verjüngt, deren Außendurchmesser größer ist als der verjüngte Außendurchmesser.

6. Kernreaktorbrennelement nach Anspruch 1,
**dadurch gekennzeichnet,** daß der Zylinderkörper (10) mit der Leitschaufel (12) zwischen dem teillangen Brennstab (8) und einem zum teillangen Brennstab (8) koaxialen Rohr (14) angeordnet ist, das an einem dem Zylinderkörper (10) benachbarten Rohrende eine Dampfeintrittsöffnung (15) und am anderen Rohrende eine Dampfaustrittsöffnung aufweist.

7. Kernreaktorbrennelement nach Anspruch 6,
**dadurch gekennzeichnet,** daß das koaxiale Rohr (14) am Zylinderkörper (10) angebracht ist und daß die Dampfeintrittsöffnung (15) radial in der Wand des Rohres (14) ausgeführt ist.

8. Kernreaktorbrennelement nach Anspruch 6,
**dadurch gekennzeichnet,** daß sich der Außendurchmesser an einer Stelle des Rohres (16) in Längsrichtung des Rohres (16) weg von dem Zylinderkörper (10) mit der Leitschaufel (12) gesehen kontinuierlich verjüngt bis zu einer koaxialen, scharfkantigen Stufe (16) mit einem Außendurchmesser, der größer ist als der verjüngte Außendurchmesser.

9. Kernreaktorbrennelement nach Anspruch 6,
**dadurch gekennzeichnet,** daß das Rohr (16), die Leitschaufel (12) am Zylinderkörper (10) und der teillange Brennstab gleichen Außendurchmesser haben.

10. Kernreaktorbrennelement mit zueinander parallelen, nebeneinander angeordneten, Kernbrennstoff enthaltenden Brennstäben, von denen jeder durch eine Masche eines Abstandhalters geführt ist, die sich in einer zur Längsrichtung der Brennstäbe rechtwinkligen Ebene befindet, sowie mit einem Kernbrennstoff enthaltenden, zu den Brennstäben parallelen teillangen Brennstab, der ebenfalls durch eine Masche des Abstandhalters geführt ist, der über einer Oberseite des Abstandhalters kürzer herausragt als benachbarte Brennstäbe und der an dem Oberende über dieser Oberseite einen Drallerzeuger aufweist,
**dadurch gekennzeichnet,** daß der Drallerzeuger ein zum teillangen Brennstab (8) koaxialer Zylinderkörper ist, auf dessen äußerer, zur Achse des Zylinderkörpers rechtwinkliger Stirnfläche ein flaches Blech (17) angebracht ist, das sich in einer von der Achse und einem Durchmesser der Stirnfläche gebildeten Ebene befindet, längs der Achse geschlitzt ist und zwei entgegengesetzt um eine zu dem Durchmesser der Stirnfläche parallele Biegelinie (18) geneigte Fahnen (20, 21) bildet.

11. Kernreaktorbrennelement nach Anspruch 10,
**dadurch gekennzeichnet,** daß der koaxiale Zylinderkörper der teillange Brennstab (8) selbst ist.
